(19) **Europäisches Patentamt**
**European Patent Office**
**Office européen des brevets**

(11) **EP 4 034 840 B1**

(12) **EUROPEAN PATENT SPECIFICATION**

(45) Date of publication and mention
of the grant of the patent:
**14.02.2024 Bulletin 2024/07**

(21) Application number: **19778944.9**

(22) Date of filing: **24.09.2019**

(51) International Patent Classification (IPC):
***G01C 21/36*** *(2006.01)*

(52) Cooperative Patent Classification (CPC):
**G06N 3/084; G01C 21/3629; G01C 21/3644;
G06N 3/044; G06N 3/045; G06N 3/047**

(86) International application number:
**PCT/EP2019/075704**

(87) International publication number:
**WO 2021/058090 (01.04.2021 Gazette 2021/13)**

(54) **SYSTEM AND METHOD FOR NAVIGATING A VEHICLE USING LANGUAGE INSTRUCTIONS**

SYSTEM UND VERFAHREN ZUM LENKEN EINES FAHRZEUGS DURCH SPRACHBEFEHLE

SYSTÈME ET PROCÉDÉ DE PILOTAGE D'UN VÉHICULE A L'AIDE D'INSTRUCTIONS DE LANGAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.08.2022 Bulletin 2022/31**

(73) Proprietors:
• **Toyota Motor Europe
1140 Brussels (BE)**
• **ETH Zurich - The Swiss Federal Institute of
Technology Zurich
8092 Zurich (CH)**

(72) Inventors:
• **ABBELOOS, Wim
1140 BRUSSELS (BE)**
• **DAI, Dengxin
8092 ZURICH (CH)**
• **VASUDEVAN, Arun, Balajee
8092 ZURICH (CH)**
• **VAN GOOL, Luc
8092 ZURICH (CH)**

(74) Representative: **Cabinet Beau de Loménie
158, rue de l'Université
75340 Paris Cedex 07 (FR)**

(56) References cited:
**US-A1- 2017 314 954**

**Description**

FIELD OF THE DISCLOSURE

The present disclosure is related to the field of image and language processing, in particular to a system and a corresponding training method for outdoor navigating a vehicle using language instructions, more in particular for long-range vision-and-language navigation in e.g. cities.

BACKGROUND OF THE DISCLOSURE

Research at the intersection of language and vision has been conducted extensively in the last few years. The main topics include image captioning, cf. e.g.: Karpathy, A., Fei-Fei, L.: Deep visual-semantic alignments for generating image descriptions. In: Proceedings of the IEEE conference on computer vision and pattern recognition (2015),

visual question answering (VQA), cf. e.g.: Agrawal, A., Lu, J., Antol, S., Mitchell, M., Zitnick, C.L., Parikh, D., Batra, D.: Vqa: Visual question answering. International Journal of Computer Vision 123(1), 4-31 (2017),
object referring expressions, cf. e.g.: Anne Hendricks, L., Wang, O., Shechtman, E., Sivic, J., Darrell, T., Russell, B.: Localizing moments in video with natural language. In: Proceedings of the IEEE International Conference on Computer Vision (2017),
grounded language learning, cf. e.g.: Hermann, K.M., Hill, F., Green, S., Wang, F., Faulkner, R., Soyer, H., Szepesvari, D., Czarnecki, W., Jaderberg, M., Teplyashin, D., Wainwright, M., Apps, C., Hassabis, D., Blunsom, P.: Grounded language learning in a simulated 3d world. CoRR abs/1706.06551 (2017).

For example, it is a common practice to represent visual data with CNNs pre-trained for image recognition and to represent textual data with word embeddings pre-trained on large text corpora. However, the perceptual input to the system is usually static.
In more detail, vision based navigation (i.e. navigation based on vision and reinforcement learning (RL)) has become a very interesting research topic recently. The technique has proven quite successful in simulated environments, cf. e.g.:
Mirowski, P.W., Pascanu, R., Viola, F., Soyer, H., Ballard, A.J., Banino, A., Denil, M., Goroshin, R., Sifre, L., Kavukcuoglu, K., Kumaran, D., Hadsell, R.: Learning to navigate in complex environments. In: ICLR (2017).
There has been active research on navigation-related tasks, such as localizing from only an image. Thoma et al. formulates compact map construction and accurate self localization for image based navigation by careful selection of suitable visual landmarks, cf.:
Thoma, J., Paudel, D.P., Chhatkuli, A., Probst, T., Gool, L.V.: Mapping, localization and path planning for image-based navigation using visual features and map. In: The IEEE Conference on Computer Vision and Pattern Recognition (CVPR) (2019).
Recently, Wortsman et al. proposes a meta-reinforcement learning approach for visual navigation, where the agent learns to adapt in unseen environments in a self-supervised manner, cf.:
Wortsman, M., Ehsani, K., Rastegari, M., Farhadi, A., Mottaghi, R.: Learning to learn how to learn: Self-adaptive visual navigation using meta-learning. In: The IEEE Conference on Computer Vision and Pattern Recognition (CVPR).
Vision-and-Language Navigation comprises the task to navigate an agent in an environment to a particular destination based on language instructions, cf. e.g.:
Anderson, P., Wu, Q., Teney, D., Bruce, J., Johnson, M., S"underhauf, N., Reid, I., Gould, S., van den Hengel, A.: Vision-and-language navigation: Interpreting visually-grounded navigation instructions in real environments. In: Proceedings of the IEEE Conference on Computer Vision and Pattern Recognition (2018).
It is desirable to navigate from a starting point to a destination in a visual environment with language directional descriptions. In this context, Anderson et al. (as cited above) created a dataset for indoor room-to-room navigation and proposed a learning method based sequence-to-sequence neural networks.
Chen et al. proposes a natural language based outdoor navigation with an outdoor VLN dataset, cf.:
Chen, H., Shur, A., Misra, D., Snavely, N., Artzi, Y.: Touchdown: Natural language navigation and spatial reasoning in visual street environments. In: Proceedings of the IEEE Conference on Computer Vision and Pattern Recognition (2019).
Visual landmarks for Navigation may be used for navigation. There are numerous studies in cognition and psychology which state the significance of using visual landmarks in route descriptions, cf. e.g.: Hölscher, C., Tenbrink, T., Wiener, J.M.: Would you follow your own route description? cognitive strategies in urban route planning. Cognition 121(2), 228-247 (2011).
Route descriptions may consist of descriptions for visual landmarks and local directional instructions between consecutive landmarks. Similar techniques - a combination of visual landmarks, as rendered icons, and highlighted routes between consecutive landmarks - are constantly used for making efficient maps, cf. e.g.:

Millonig, A., Schechtner, K.: Developing landmark-based pedestrian-navigation systems. IEEE Transactions on Intelligent Transportation Systems 8(1), 43-49 (2007).

Attention & Memory for Language Modeling Attention mechanism has been used widely for language and visual inputs, cf. e.g.:

Xu, K., Ba, J., Kiros, R., Cho, K., Courville, A., Salakhudinov, R., Zemel, R., Bengio, Y.: Show, attend and tell: Neural image caption generation with visual attention. In: International conference on machine learning, pp. 2048-2057 (2015).

Language attention mechanism has been shown to produce state-of-the-art results in machine translation and other natural language processing tasks. Attention mechanism is one of the main component for the top-performing algorithms such as Transformer and BERT in NLP tasks, cf.:

Vaswani, A., Shazeer, N., Parmar, N., Uszkoreit, J., Jones, L., Gomez, A.N., Kaiser, L., Polosukhin, I.: Attention is all you need. In: Advances in Neural Information Processing Systems, pp. 5998-6008 (2017),

Devlin, J., Chang, M.W., Lee, K., Toutanova, K.: Bert: Pre-training of deep bidirectional transformers for language understanding. arXiv preprint arXiv: 1810.04805 (2018).

There are generally two kinds of memory used in the literature: a) implicit memory and b) explicit memory. Implicit memory learns to memorize knowledge in the hidden state vectors via back-propagation of errors. Typical examples include RNNs and LSTMs. Explicit memory, however, features explicit read and write modules with attention mechanism. Notable examples are Neural Turing Machines and Differentiable Neural Computers (DNCs).

Autonomous driving models often consider the goal as fixed at the start of the ride. Yet, in practice, passengers will still want to influence the route, e.g. to pick up something along the way.

For example, in case a tourist is traveling in a new city and is looking for the famous coffee shop, said tourist would ask the locals and get a directional description "go ahead for about 200 meters until you hit a small intersection, then turn left and continue along the street before you see a yellow building on your right". Humans give indications that are not purely directional, let alone metric. They mix in referrals to landmarks that you will find along your route. This may seemlike a trivial ability, as humans do this routinely. Yet, this is a complex cognitive task that relies on the development of an internal, spatial representation that includes visual landmarks (e.g. "the yellow building") and possible, local directions (e.g. "going forward for about 200 meters"). Such representation can support a continuous self-localization as well as conveying a sense of direction towards the goal.

Just as a human can navigate in a new city when provided with navigational instructions, the object of the present disclosure is to teach a system (or an agent provided by the system) to perform the same task. If robots (or a vehicle comprising a system) can find their way efficiently based on similar instructions, they will be able to reach their desired destination and perform their task with less effort for the humans giving them instructions. The robot then 'understands' the same levels of abstraction. The task may be addressed as a Vision-and-Language Navigation (VLN) problem. Although important progress was made, e.g. in constructing good datasets and proposing effective learning methods, this stream of work mainly focuses on synthetic worlds (cf. Hölscher et.al. as cited above) or indoor room-to-room navigation (cf. Anderson et.al. as cited above). Synthetic environments limit the complexity of the visual scenes while the room-to-room navigation comes with the kind of challenges different from those of outdoors.

In order to learn long-range wayfinding in outdoor scenes, the first challenge (or problem) lies with the creation of large-scale datasets. In order to be fully effective, the annotators providing the navigation instructions ought to know the environment like locals would. Training annotators to reach the same level of understanding for a large number of unknown environments is inefficient - in order to create one verbal navigation instruction, an annotator needs to search through hundreds of street-view images, remember their spatial arrangement, and summarize them into a sequence of route instructions. This straightforward annotation approach would be very time-consuming and error-prone. Because of this challenge, the known work uses synthetic directional instructions or works mostly on indoor room-to-room navigation. For indoor room-to-room navigation, this challenge is less severe, due to two reasons: 1) the paths in indoor navigation are shorter; and 2) indoor environments have a higher density of 'landmarks'. This makes self-localization, route remembering and descriptions easier.

The second challenge (or problem) lies in training a wayfinding agent. Compared to indoor navigation, this learning task raises different challenges such as handling longer ranges, using cardinal directions, the placement, position and size of signs and visual landmarks, the position of the Sun, and the characteristics of traffic flows. Use in different environment also drastically changes the kind of language it elicits and requires fundamentally different reasoning. In this context, US 2017/314954 A1 discloses systems and methods for using real-time imagery in navigation.

SUMMARY OF THE DISCLOSURE

Currently, it remains desirable to overcome the aforementioned problems and in particular to provide a corresponding training method for outdoor navigating a vehicle using language instructions, which is suitable for long-range vision-and-language navigation e.g. in cities.

Therefore, according to the embodiments of the present disclosure, a system (e.g. a neural network agent system) for outdoor navigating a vehicle using language instructions is provided. The system is configured to navigate the vehicle along an instructed navigation path comprising landmarks along the navigation path and subpaths between adjacent landmarks. The system comprises:

- a language model configured to output semantic navigation information based on inputted language instructions, said inputted language instructions describing the instructed navigation path, said semantic navigation information comprising at least one subpath description and at least one landmark description,
- a memory module configured to store an already traveled path from the latest passed landmark, such that a state of the memory is continuously and/or repeatedly updated during traveling,
- a directional matching model configured to estimate similarity between a subpath description and the current memory state, in order to output a directional matching score,
- a landmark matching model configured to match the landmark description to a current image captured from the environment of the vehicle, in order to output a landmark matching score,
- an action space probability prediction network configured to estimate possible traveling directions based on the current image, the memory state and the subpath description, in order to output an action space probability, and
- an action model configured to predict a next navigation step at the current location based on the directional matching score, the landmark matching score and the estimation of the space probability.

By providing such a system, e.g. a neural network agent, it becomes possible to automatically finding the way in e.g. cities based on verbal navigational instructions and street-view images. In the following, the agent may be understood as being provided by the system, or the terms "system" and "agent" may be used interchangeably.

Accordingly, a soft attention mechanism may be introduced which is defined over the segmented language instructions to jointly extract two partial instructions - one for matching the next coming visual landmark and the other for matching the spatial transition to the next landmark. Furthermore, the spatial transitions of the agent may be encoded by an explicit memory framework which can be read from and written to as the agent navigates.

The present disclosure may thereby connect two lines of research that have been less explored together so far: mental formalization of verbal navigational instructions and training neural network agent for automatic wayfinding.

Generally, a model may be understood as being or comprising an artificial neural network or other machine learning components. A module may be a software component which which may comprise one or several models and/or one or several software elements (e.g. hard coded software). In a simple case, a module may comprise only one model, i.e. it may correspond to said model.

Advantageously compared to the above-mentioned conventional techniques, the perceptual input to the system can be active instead of being static, i.e. the system's behavior may change the perceived input.

Moreover, the system is able to work with real navigational instructions, instead of the synthetic ones summarized by a map service, e.g. Google (R) Maps.

The system may further comprise a landmark indicator control model comprising an attention mechanism configured to output a landmark indicator based on the landmark matching score, the landmark indicator indicating whether a landmark has already been reached.

In particular, the system may comprise an indicator controller (IC) which comprises said landmark indicator control model.

The landmark indicator control model may be configured such that each time a visual observation is successfully matched to a landmark, the (learned) landmark indicator control model increments the reference position of the soft attention map over the language instruction to update both the landmark and directional descriptions. Optionally, this process may continue until the agent reaches the destination node or the reference position on the instruction exceeds the length or the episodic length of the navigation is exceeded.

The output of the landmark indicator control model may be fed to the language model.

The language instructions may be in the form of a (natural) text sequence, wherein the language model may comprise an attention mechanism configured to extract the at least one subpath description and landmark description.

In particular, soft attending may be adopted over linear memory features (cf. e.g. Kumar, A., Gupta, S., Fouhey, D., Levine, S., Malik, J.: Visual memory for robust path following. In: Advances in Neural Information Processing Systems) while soft attention may be applied over segmented language instructions to attend over a pair of sub-instructions: a) for landmark and b) for local directions.

The memory state may be represented by a stored image.

In particular, external explicit memory may be used in the form of a memory image which is accessed by its read and write modules. Training a soft attention mechanism over language segments coupled with an explicit memory scheme can make the system more suitable for long-range navigation where the reward signals are sparse.

The landmarks may be stationary objects located outdoor, e.g. buildings.

Each subpath may comprise a road segment or a plurality of linked road segments between two adjacent landmarks.

The system is configured to receive the current image from a panoramic camera which captures the environment of the vehicle. The system may also comprise the camera.

The language model may comprise a transformer model, e.g. BERT. The BERT transformer model may be trained for classifying each word in the inputted language instructions.

The directional matching model may comprise a generative image captioning model configured to compute the probability of reconstructing the language description given the image representing the current memory state.

The landmark matching model may also comprise a (similar) generative image captioning model configured to compute the probability of reconstructing the language description given the current image captured from the environment of the vehicle.

The generative image captioning model of the directional matching model and/or the landmark matching model may comprise a transformer model, e.g. a pretrained Captioning transformer with stacked attention modules, cf. Zhu, X., Li, L., Liu, J., Peng, H., Niu, X.: Captioning transformer with stacked attention modules. Applied Sciences 8(5), 739 (2018). The transformer may be pre-trained for captioning using ground-truth memory images and directional instructions of the ground-truth memory images.

The landmark indicator control model may comprise an Adaptive Computation Time (ACT) LSTM network.

The action model may comprise a LSTM network.

The present disclosure may also relate to a (computer implemented) method for outdoor navigating a vehicle using language instructions, the method being trained to navigate the vehicle along an instructed navigation path comprising landmarks along the navigation path and subpaths between adjacent landmarks. The method may comprise steps for carrying out the functions of the system described above. The present disclosure may relate to a method for outdoor navigating a vehicle as recited in claim 11.

The directional matching model, the landmark matching model, the landmark indicator control model and the action model may be trained in an end-to-end fashion.

Accordingly, in order to address the data annotation challenge, an interactive visual navigation environment may be developed based on street view images, e.g. Google Street View, and more importantly a novel annotation method may be designed which highlights selected landmarks and the spatial transitions in between. This enhanced annotation method makes it feasible to crowdsource this 'intimidating' annotation task.

The ranking model may be trained based on a set of human annotated couples of street view images, the human annotation indicating which one of the two images provides a more prominent landmark.

The present disclosure may further relate to a vehicle comprising the system.

The present disclosure may further relate to a computer program including instructions for executing the steps of the method described above, when said program is executed by a computer.

Finally, the present disclosure may also relate to a recording medium readable by a computer and having recorded thereon a computer program including instructions for executing the steps of the method described above, when said program is executed by a computer.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

BRIEF DESCRIPTION OF THE DRAWINGS

Fig. 1 shows a schematic block diagram of a system according to embodiments of the present disclosure; and
Fig. 2 shows an example of a navigation path (i.e. a route) according to embodiments of the present disclosure;
Fig. 3 shows a more detailed diagram of a system according to embodiments of the present disclosure; and
Fig. 4 shows examples of memory images according to embodiments of the present disclosure.

DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

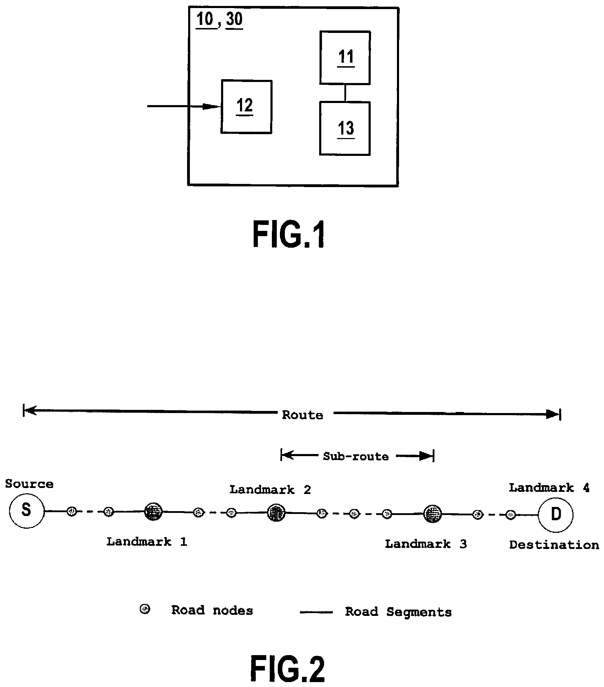

Fig. 1 shows a block diagram of a system 10 according to embodiments of the present disclosure. The system may be configured to carry out computer instructions. For example the system may comprise a processor 11 and a memory 13 for executing said instructions. The memory 13 may be a non-volatile memory and it may comprise said instructions (or a computer program), in particular one or a plurality of trained artificial neural networks (ANN), which can be executed by the processor 11 to outdoor navigating a vehicle using language instructions.

The system 10 may further comprise an acquisition module 12 configured to acquire images (e.g. one or several cameras) and/or to acquire natural text (e.g. a text input system and/or a voice recognition system).

Generally spoken, the system is configured to (i.e. its models are trained to) navigate using language descriptions in real outdoor environment. In order to do so, the system is configured to store and run (e.g. using processor 11 and the memory 13) the models and modules, as e.g. described below. In this way, the system may provide an agent for vehicle navigation, as e.g. described below.

The system may be a vehicle 30 or may be comprised by a vehicle 30.

Talk2Nav Dataset

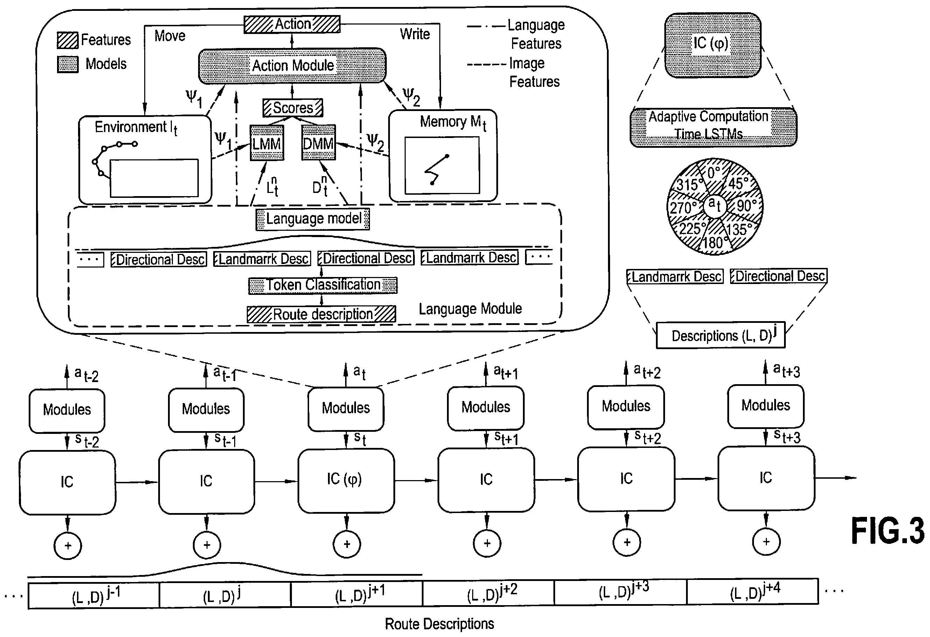

Before explaining the system in detail with reference to fig. 3, an exemplary data set will be described based on which the models of the system may be trained. It is however noted that the described dataset and/or the way how it is generated are merely examples. Also other datasets and/or respective generation methods may be used.

Existing datasets on language based visual navigation tasks typically have one overall language description for the entire path/route, lacking the correspondence between language descriptions and sub-units of a route. This poses challenges in learning long-range vision-and-language navigation (VLN). To address this issue, this disclosure proposes a new annotation method and uses it to create a new dataset which is referred to in the following as "Talk2Nav".

Talk2Nav contains navigation routes at city levels. A navigational city graph is created with nodes as locations in the city and connecting edges as the roads between the nodes. Each route from a source node to a destination node is composed of densely sampled atomic unit nodes, each containing a) street-view panoramic image, b) GPS coordinates, c) bearing angles. Furthermore, it is desirable to enrich the routes with intermediary visual landmarks, language descriptions for these visual landmarks and the local directional instructions connecting the landmarks

Data Collection

To retrieve city route data, map data as e.g. OpenStreetMap may be used for getting metadata information of locations and e.g. Google's APIs are used to obtain maps and street-view images

The path from a source to a destination is sampled from a city graph. To that aim, e.g. OpenStreetMap may be which provides latitudes, longitudes and bearing angles of all the locations (waypoints) within a predefined region in the map. A city graph is defined by taking the locations of the atomic units as the nodes, and the directional connections between neighbourhood locations as the edges. The K-means clustering algorithm (e.g. k=5) is applied to the spatial locations (GPS coordinates) of all nodes. Then two nodes are randomly picked up from different clusters to ensure that the source node and the destination node are not too close. Then a path may be generated by finding the shortest traversal path from the source to destination in the city graph.

Moreover, panoramic, e.g. the 360 street-view images along with its heading angle (yaw_deg) may be collected with the help of e.g. Google Street View API and the metadata. The API allows for downloading tiles of street-view panoramic images which are then stitched together as an equirectangular projection image. It is possible to use the heading angle to re-render the street-view panorama images such that the images are centre-aligned to the heading direction of the route

Directional Instruction Annotation

The main challenge of data annotation for automatic language-based wayfinding lies in the fact that the human annotators need to play the role of an instructor as e.g. local people do to tourists. This is especially challenging when the annotators do not know the environment well. The number of street-view images for a new environment is tremendous and searching through them can be costly, not to mention remembering and summarizing them to verbal directional instructions.

The proposed annotation method may thus be designed to specifically promote memory or thinking of the annotators. For the route directions, people usually refer to visual landmarks along with a local directional instruction. Visualizing the route with highlighted salient landmarks and local directional transitions compensates for limited familiarity or understanding of the environment.

Landmark Mining

The choice of landmarks along the route is a subjective task. Said task may be framed as a summarization problem using sub-modular optimization to create summaries that takes into account multiple objectives. Three criteria may be considered: 1) the selected images are encouraged to spread out along the route to support continuous localization and guidance; 2) images close to road intersections and the approaching side of the intersections are preferred for better guidance through intersections; and 3) images which are easy to be described, remembered and identified are preferred for effective communication.

Given the set of all images $\mathcal{J}$ along a path $P$, the problem may be formulated as a subset selection problem that maximizes a linear combination of the three submodular objectives:

$$\mathcal{L} = \underset{\mathcal{L}' \subseteq \wp(\mathcal{J})}{\operatorname{argmax}} \sum_{i=1}^{3} w_i\, f_i(\mathcal{L}', P), \quad s.t.\, |\mathcal{L}'| = l \qquad (1)$$

where $\wp(\mathcal{J})$ is the powerset of $\mathcal{J}$, $\mathcal{L}'$ is the set of all possible solutions for the size of $l$, $w_i$ are non-negative weights, and $f_i$ are the sub-modular objective functions. More specifically, $f_1$ is the minimum travel distance between any of the two successive selected images along the route P; $f_2 = 1/(d + \sigma)$ with $d$ the distance to the closest approaching intersection and $\sigma$ is set to 15 meters to avoid having an infinitely large value for intersection nodes; $f_3$ is a learned ranking function which signals the easiness of describing and remembering the selected images. The weights $w_i$ in Equation 1 may be set empirically: For example, $w_1 = 1$, $w_2 = 1$ and $w_3 = 3$. $l$ is set to 3 as there is source and destination node to be fixed and e.g. at least one, for example three landmarks may be chosen in between as shown in fig. 2. The model $f_3$ is presented next.

Fig. 2 shows an example of a navigation path (route) according to embodiments of the present disclosure, here an illustrative route from a source node to a destination node with 4 landmarks labelled along the route. Landmark 4 is same as the destination node. Sub-routes are defined as routes between the consecutive landmarks.

In order to train the ranking model for images of being 'visual landmarks' that are easier to describe and remember, images from different cities may be compiled: For example, from New York City (NYC), San Francisco (SFO) and London covering different landscapes such as high buildings, open fields, downtown areas, etc. In said example e.g. 20,000 pairs of images from the compiled set. A pairwise comparison is performed over said 20,000 pairs to choose one over the other. The annotation may be crowd-sourced with the following criteria: a) Describability - how easy to describe it by the annotator, b) Memorability - how easy to remember it by the agent (e.g. a traveler such as a tourist), and c) Recognizability - how easy to recognize it by the agent. It is desirable to learn the ranking model with a Siamese network, cf.:

Chopra, S.: Learning a similarity metric discriminatively, with application to face verification. In: IEEE Conference on Compter Vision and Pattern Recognition

The model takes a pair of images and scores the selected image more than the other one. The Huber rank loss may be used as the cost function. In the inference stage, the model ($f_3$ in Equation 1) outputs the averaged score for all selected images signalling their suitability as visual landmarks for the VLN task.

Annotation and Dataset Statistics

In the route description annotation process, the mined visual landmarks are provided, along with an overhead topological map and the street-view interface. This annotation task may be crowd-source on e.g. Amazon Mechanical Turk.

The annotator may navigate the complete route comprising of $m$ landmark nodes and $m$ intermediate sub-paths and is asked to provide descriptions for all landmarks and for the local directional navigation of all sub-paths.

Approach

A street-view environment may be created on top of the compiled city graph of Talk2Nav dataset. The city graph consists of a plurality of nodes (e.g. more than 20.000) with the corresponding street-view images (outdoor) and a plurality of edges (e.g. more than 80.000) representing the travelable road segments between the nodes. During training and testing stages, this simulator may be used to navigate the system in the Street View environment using the city graph. Based on the predicted action at each node, the system moves to the next node in the environment.

The system may provide a single agent traveling in an environment represented as a directed connected graph. Each node contains a 360panoramic image, a location (defined by latitudes and longitudes) and bearing angles of the connecting roads. A valid route is a sequence of connected edges from a source node to a destination node. A successful navigation is defined as when the agent correctly follows the right route referred by the natural language instruction. In short, the environment has discrete set of state spaces as nodes in the city graph. The prospective future states of the agent of the environment are a function of the actions made by the agent. For the sake of tractability, no uncertainty (such as dynamic changes in the environment, noise in the actuators) is assumed in the environment; hence it is a deterministic goal setting.

Fig. 3 shows a more detailed diagram of a system according to embodiments of the present disclosure, in particular the individual models and modules of the system.

Route Finding Task

The task defines the goal of the system according to the disclosure (or an agent provided by the system) to navigate from a source node to a destination node based on a navigational instruction. Specifically, given a natural language instruction $X = \{x_1, x_2, ..., x_n\}$, the agent needs to perform a sequence of actions $\{a_1, a_2, ..., a_m\}$ from action space $\mathcal{A}$ to hop over nodes in the environment space to reach the destination node. When the agent executes an action, it interacts with the environment and receives a new visual observation. The agent performs this kind of action sequentially until it reaches the destination node successfully or fails the task because it exceeds the maximum episode length.

The agent learns to predict an action at each state to navigate in the environment. Learning long-range vision-and-language navigation (VLN) requires an accurate sequential matching between the navigation instruction and the route. As argued in the introduction, it is observed that navigation instructions consist of two major classes: landmark descriptions and local directional instructions between landmarks. In this disclosure, given a language instruction, the method carried out by the agent (i.e. the system) segments it to a sequence of two interleaving classes: landmark descriptions and local directional instruction. As it moves, the agent learns an associated reference position in the language instruction to obtain a softly-attended local directional instruction and landmark description. When one landmark is achieved, the agent updates its attention and moves towards the new goal, i.e. the next landmark. Two matching modules, i.e. a Landmark Matchin Model LMM and a Directional Matching Model DMM (LMM and DMM as shown in fig. 3) are used to score each state: 1) between the traversed path in memory and the local, softly-attended directional instruction, and 2) between the visual scene the agent observes at the current node and the local, softly-attended landmark description. An explicit external memory is used to store the traversed path from the latest visited landmark to the current position.

Each time a visual observation is successfully matched to a landmark, a learned controller increments the reference position of the soft attention map over the language instruction to update both the landmark and directional descriptions. This process continues until the agent reaches the destination node or the reference position on the instruction exceeds the length or the episodic length of the navigation is exceeded. A schematic diagram of the method is shown in fig. 3. Below examples of the models used in the system are described in detail.

Language

The system (i.e. the agent) further comprises a language model LM. Said language model LM segments the given instruction to two classes: a) visual landmark descriptions and b) local directional instructions between the landmarks. For example, the BERT transformer model may be employed to classify a given language instruction $X$ into a sequence of token classes $\{c_i\}_{i=1}^{n}$ where $c_i \in \{0,1\}$, with 0 denoting the landmark descriptions and and 1 denoting the local directional instructions. By grouping consecutive segments of the same token class, the whole instruction is segmented into interleaving segments. Those segments are used as the basic units of the attention scheme rather than the individual words used by previous methods, cf. e.g. Anderson et.al. as cited above. This segmentation converts the language description into a more structured representation, aiming to facilitate the language-vision and language-trajectory matching problem. Denoted by $T(X)$ a sequence of segments of landmark and local directional instructions, then

$$T(X) = ((L^1, D^1), (L^2, D^2), \ldots, (L^J, D^J)) \qquad (2)$$

where $L^j$ denotes the feature representation for landmark description segment $j$, $D^j$ denotes the feature representation for directional instruction segment $j$, and $J$ is the total number of segments in the route description.

As it moves in the environment, the agent is associated with a reference position in the language description in order to put the focus on the most relevant landmark descriptions and the most relevant local directional instructions. This is modeled by a differentiable soft attention map. The reference position for time step t may be denoted by $\eta_t$. The relevant landmark description at time step t is extracted as

$$\bar{L}^{\eta_t} = \sum_{j=1}^{J} L^j \, e^{-|\eta_t - j|} \qquad (3)$$

and the relevant directional instruction as

$$\bar{D}^{\eta_t} = \sum_{j=1}^{J} D^j \, e^{-|\eta_t - j|}, \qquad (4)$$

where

$$\eta_{t+1} = \eta_t + \phi_t(.) \text{ and} \qquad (5)$$
$$\eta_0 = 1.$$

$\phi_t(.)$ is an Indicator Controller learned to output 1 when a landmark is reached and 0 otherwise. After a landmark is reached, $\eta_t$ increments 1 and the attention map then centers around the next pair of landmark and directional instructions. For example $\eta_0$ may be initialized as 1 to position the language attention around the first pair of landmark and directional instruction.

Visual Observation

The agent may perceive the environment with an equipped panoramic, e.g. 360° camera which obtains the visual observation $I_t$ of the environment at time step t. From the image, a feature $\psi_1(I_t)$ is extracted and passed to the matching module as shown in fig. 3 which estimates the similarity (matching score) between the visual observation $I_t$ and a softly attended landmark description $\vec{L}^{\eta t}$ which is modulated by the attention module. The visual feature is also passed to the action module to predict the action for the next step as shown in the section below describing the action module.

Spatial Memory

The system (i.e. the agent) further comprises a memory molue, i.e. external memory $M_t$. Said external memory $M_t$ explicitly memorizes the agent's traversed path from the latest visited landmark. When the agent reaches a landmark, the memory $M_t$ is reinitialized to memorize the traversed path from the latest visited landmark. This reinitialization can be understood as a type of attention to focus on the recently traversed path in order to better localize and to better match against the relevant directional instructions $\vec{D}^{\eta t}$ modeled by the learned language attention module, as described above.

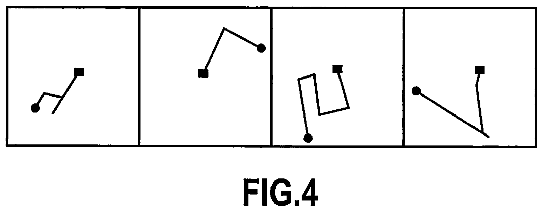

Fig. 4 shows examples of memory images according to embodiments of the present disclosure. As the agent navigates in the environment, a write module traces the path from topological view using the sequence of GPS coordinates of the traversed path. Said write module traces the path travelled from the latest visited landmark to the current position. The path may be rasterized into an image. As to the rasterisation, lines are used to represent the path, square marks are used to denote the source, and disk markers are used for the current location of the agent. The landmark and the memory can start fresh. The write module always writes from the centre of the memory image. Whenever the coordinates of the new rasterized pixel are beyond the image dimensions, the module increases the scale of the map until the new pixel is in the image and has a distance of 10 pixels to the boundary. An image of e.g. $200 \times 200$ pixels may be used and the initial scale of the map may be set to 5 meters per pixel.
Each memory image is associated with the value of its scale (meters per pixel). Deep features $\psi_2(M_t)$ are extracted from the memory image $M_t$ which are then concatenated with its scale value. The concatenated features are passed to the matching module. The matching module verifies the semantic similarity between the traversed path and the provided local directional instruction. The concatenated features are also provided to the action module along with the local directional instruction features to predict the action for the next step.

Matching Module

The system (i.e. the agent) further comprises a matching module. Said matching module may comprise the landmark matching model LMM according to the disclosure and/or the directional matching model DMM according to the disclosure. The matching module is used to determine whether the aimed landmark is reached. As shown in fig. 3, the matching score is determined by two complementary matching modules (i.e. a directional matching model DMM and a landmark matching model LMM): 1) between the visual scene $\psi_1(I_t)$ and the extracted landmark description $\vec{L}^{\eta t}$ (i.e the landmark matching model LMM according to the present disclosure) and 2) between the spatial memory $\psi_2(M_t)$ and the extracted directional instruction $\vec{D}^{\eta t}$ (i.e the directional matching model DMM according to the present disclosure). For both cases, a generative image captioning model may be used and the probability of reconstructing the language description given the image may be computed. Scores are the averaged generative probability over all words in the instruction. Let $s_t^1$ be the score for pair $(\psi_1(I_t),\vec{L}^{\eta t})$ and $s_t^2$ be the score for pair $(\psi_2(M_t),D^{\eta t})$. Then the score feature $s_t$ is computed by concatenating the two:

$$\boldsymbol{s}_t = (s_t^1, s_t^2). \tag{6}$$

The score feature $\boldsymbol{s}_t$ is fed into a controller $\phi(.)$ (i.e. the indicator controller IC in fig. 3) to decide whether the aimed landmark is reached:

$$\phi_t(\boldsymbol{s}_t, \boldsymbol{h}_{t-1}) \in \{0,1\}, \tag{7}$$

where 1 indicates that the aimed landmark is reached and 0 otherwise, $\phi_t(.)$ is an Adaptive Computation Time (ACT) LSTM which allows the controller to learn to make decisions at variable time steps, $\boldsymbol{h}_{t-1}$ is the hidden state of the controller. In the present disclosure, $\phi_t(.)$ learns to identify the landmarks with the variable number of intermediate navigation steps.

Action Module

The system (i.e. the agent) further comprises an action module. Said action module may comprise the action space probability network according to the disclosure and/or the action model according to the disclosure.
The action module takes the following inputs to decide the moving action: a) the pair of $(\psi_1(I_t),\vec{L}^{\eta t})$, b) the pair of $(\psi_2(M_t),\vec{D}^{\eta t})$, and c) the matching score feature $\boldsymbol{s}_t$ as defined in Equation (6). The illustrative diagram is shown in fig. 3.

The inputs in *a)* above is used to predict $\boldsymbol{a}_t^e$ - a probability vector of actions over the action space. The inputs in *b)* is used to predict $\boldsymbol{a}_t^m$ - the second probability vector of actions over the action space. The two probability vectors are combined by a weighted average, with weights learned from the score feature $\boldsymbol{s}_t$. Specifically, $\boldsymbol{s}_t$ is fed to a FC network to output the weights $\boldsymbol{w} \in \mathbb{R}^2$. For both *a)* and *b)*, encoder LSTM may be used to encode the language instruction $D^{\eta t}$. Then the encoder's hidden states are concatenated with the image encodings (i.e. $\psi_1(I_t)$ and $\psi_2(M_t)$) and pass through a FC (fully connected) network to predict the probability distribution $\boldsymbol{a}_t^e$ and $\boldsymbol{a}_t^m$. Final action prediction $\boldsymbol{a}_t$ are made as:

$$\boldsymbol{a}_t = \frac{1}{\sum_i w_i} (w_0 * \boldsymbol{a}_t^e + w_1 * \boldsymbol{a}_t^m). \tag{8}$$

The action space probability network according to the disclosure may be configured to predict $\boldsymbol{a}_t$, e.g. by applying eq. 8.

In one example the action space $\mathcal{A}$ may be defined as follows. The action space A may be divided into e.g. 8 directions. Each direction is centred at $\{(i * 45): i \in [0, ...,7]\}$ with $\pm 22.5$ offset as illustrated in fig. 3. When an action angle is predicted, the agent turns to the particular angle and moves forward to the next node along the road. The turning and moving-forward define an atomic action. The agent comes to a stop when it encounters the final landmark.

Learning

The models of the system are trained in a supervised way. For example the student-forcing approach may be followed to train the system, as proposed e.g. in Anderson et.al. as cited above. At each step, the action module is trained with a supervisory signal of the action in the direction of the next landmark. This is in contrast with previous methods (e.g. Anderson et.al. as cited above), in which it is the direction to the final destination.

Cross entropy loss may be used to train the action module and the matching module as they are formulated as classification tasks for action prediction and conditioned generation of navigation instructions, respectively. For the ACT model, weighted binary cross entropy loss may be used at every step (higher weight for positives). The supervision of the positive label ('1') for ACT model comes into effect only if the agent reaches the landmark which is sporadic. In short, the total loss may be a summation of the action module loss functions with equal weights:

$$Loss = Loss_{\text{action}} + Loss_{\text{matching}}^{\text{landmark}} + Loss_{\text{matching}}^{\text{direction}} \qquad (9)$$
$$+ Loss_{\text{ACT}}.$$

The losses of the two matching modules take effect only at the place of landmarks which are much sparser than the road nodes where the action loss and ACT loss are computed. Because of this, first the matching networks may be trained individually for the matching tasks, and then integrate them with other components for the overall training.

Implementation Examples

As the language model LM the pre-trained BERT transformer model may be used. This yields contextual word representations which is different from classical models such as word2vec, GloVe which are context-free. A word-piece tokenizer may be used to tokenize the sentence, by following e.g. Devlin, J., Chang, M.W., Lee, K., Toutanova, K.: Bert: Pre-training of deep bidirectional transformers for language under-standing. arXiv preprint arXiv:1810.04805 (2018).

Out of vocabulary words are split into sub-words based on the available vocabulary words. For word token classification, first BERT transformer is trained with a token classification head. Here, the alignment between the given language instruction $X$ and their corresponding set of landmark is used and directional instruction segments in the train split of Talk2Nav dataset. Then the transformer model is trained to classify each word token in the navigational instruction to be a landmark description or a local directional instruction.

At the inference stage, the model predicts a binary label for each word token. IT is also possible to convert the sequence of word token classes into segments $T(X)$ by simply grouping adjacent tokens which have the same class.

Concerning the visual inputs to the system the street-view images may be acquired in the form of equirectangular projection. It is possible to use SphereNet architecture pretrained on the MNIST dataset and ResNet-101 pretrained on ImageNet to extract $\psi_1(I)$, cf. e.g.:

B. Coors, A. Paul Condurache, and A. Geiger. Spherenet: Learning spherical representations for detection and classification in omnidirectional images. In Proceedings of the European Conference on Computer Vision (ECCV), pages 518-533, 2018,
LeCun, Y., Bottou, L., Bengio, Y., Haffner, P., et al.: Gradient-based learning applied to document recognition. Proceedings of the IEEE 86(11), 2278-2324 (1998),
He, K., Zhang, X., Ren, S., Sun, J.: Deep residual learning for image recognition. In: Proceedings of the IEEE conference on computer vision and pattern recognition (2016),
Deng, J., Dong, W., Socher, R., Li, L.J., Li, K., Fei-Fei, L.: Imagenet: A large-scale hierarchical image database. In: IEEE conference on computer vision and pattern recognition (2009).

Since MNIST pretrained SphereNet is a relatively shallow network, SphereNet architecture may be adapted to suit StreetView images by adding more convolutional blocks. It is also possible to define a pretext task using the street-view images from Talk2Nav dataset to learn SphereNet weights. Given two street view images with an overlap of their visible view, the task is to predict the difference between their bearing angles and the projection of line joining the locations on the bearing angle of second location. The problem may be framed as a regression task of predicting the above two angles. This encourages SphereNet to learn the semantics in the scene. In the case of memory image, e.g. ResNet-101 pretrained on ImageNet to extract $\psi_2(M)$ from the memory image M may be used.

With regard to the other modules, image captioning may be performed in the matching modules using the transformer model, by following e.g.:

Luo, R., Price, B., Cohen, S., Shakhnarovich, G.: Discriminability objective for training descriptive captions. arXiv preprint arXiv:1803.04376 (2018), Zhu, X., Li, L., Liu, J., Peng, H., Niu, X.: Captioning transformer with stacked attention modules. Applied Sciences 8(5), 739 (2018).

The transformer model may be pre-trained for captioning in the matching module using the landmark street-view images and their corresponding descriptions from the training split of Talk2Nav for matching of the landmarks. For the other matching module of local directions, the transformer model may be pre-trained using the ground truth memory images and their corresponding directional instructions. It is possible to synthesize the ground truth memory image in the same way as the write module in agent's external memory. Furthermore it is possible finetune both the match modules in the training stage. All the other models such as Indicator Controller (i.e. the landmark indicator control model according to the present disclosure), action module may be trained in an end-to-end fashion.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

**Claims**

1. A system for outdoor navigating a vehicle using language instructions, the system being configured to navigate the vehicle along an instructed navigation path comprising landmarks along the navigation path and subpaths between adjacent landmarks, the system comprising:

   a language model (LM) configured to output semantic navigation information based on inputted language instructions, said inputted language instructions describing the instructed navigation path, said semantic navigation information comprising at least one subpath description and at least one landmark description,
   a memory module ($M_t$) configured to store an already traveled path from the latest passed landmark, such that a state of the memory is continuously and/or repeatedly updated during traveling,
   a directional matching model (DMM) configured to estimate similarity between a subpath description and the current memory state, in order to output a directional matching score,
   a landmark matching model (LMM) configured to match the landmark description to a current image captured from the environment of the vehicle, in order to output a landmark matching score,
   an action space probability prediction network configured to estimate possible traveling directions based on the current image, the memory state and the subpath description, in order to output an action space probability, and
   an action model configured to predict a next navigation step at the current location based on the directional matching score, the landmark matching score and the action space probability.

2. The system according to claim 1, further comprising:

   a landmark indicator control model comprising an attention mechanism configured to output a landmark indicator based on the landmark matching score, the landmark indicator indicating whether a landmark has already been reached, wherein
   the output of the landmark indicator control model is fed to the language model,
   the landmark indicator control model is configured such that, each time a visual observation is successfully matched to a landmark, the landmark indicator control model increments a reference position of a soft attention map over the language instruction to update both the landmark and directional descriptions.

3. The system according to claim 1, wherein

   the language instructions are in the form of a text sequence, wherein
   the language model comprises an attention mechanism configured to extract the at least one subpath description and landmark description.

4. The system according to any one of the preceding claims, wherein the memory state is represented by a stored image.

5. The system according to any one of the preceding claims, wherein

the landmarks are stationary objects located outdoor, and/or
each subpath comprises a road segment or a plurality of linked road segments between two adjacent landmarks.

6. The system according to any one of the preceding claims, wherein the system is configured to receive the current image from a panoramic camera which captures the environment of the vehicle.

7. The system according to any one of the preceding claims, wherein the language model comprises a BERT transformer model that is pre-trained for classifying each word in the inputted language instructions.

8. The system according to any one of the preceding claims, wherein

the directional matching model comprises a generative image captioning model configured to compute the probability of reconstructing the language description given the image representing the current memory state, and/or
the landmark matching model comprises a generative image captioning model configured to compute the probability of reconstructing the language description given the current image captured from the environment of the vehicle.

9. The system according to claim 8, wherein
the generative image captioning model of the directional matching model and/or the landmark matching model comprises a transformer model pre-trained for captioning using ground-truth memory images and directional instructions of the ground-truth memory images.

10. The system according to any one of the preceding claims, wherein the landmark indicator control model comprises an Adaptive Computation Time (ACT) LSTM network, and/or the action model comprises a LSTM network.

11. A method for outdoor navigating a vehicle using language instructions, the method being implemented by a system trained to navigate the vehicle along an instructed navigation path comprising landmarks along the navigation path and subpaths between adjacent landmarks, the method comprising the steps of:

using a trained language model (LM) of the system to output semantic navigation information based on inputted language instructions, said inputted language instructions describing the instructed navigation path, said semantic navigation information comprising at least one subpath description and at least one landmark description, storing an already traveled path from the latest passed landmark in a memory module ($M_t$), wherein a state of the memory is continuously and/or repeatedly updated during traveling,
using a trained directional matching model (DMM) to estimate similarity between a subpath description and the memory state, in order to output a directional matching score,
using a trained landmark matching model (LMM) to match the landmark description to a current image captured from the environment of the vehicle, in order to output a landmark matching score,
estimating, by an action space probability prediction network, possible traveling directions based on the current image, the memory state and the subpath description, in order to output an action space probability, and
using a trained action model to predict a next navigation step at the current location based on the directional matching score, the landmark matching score and the action space probability,
wherein the language model, the directional matching model, the landmark matching model, and the action model are trained using training datasets comprising a plurality of geographic navigation paths, in particular on a map,
and for each geographic navigation path, a text sequence annotation comprising natural language instructions, wherein the natural language instructions describe landmarks along the navigation path and subpaths between adjacent landmarks, such training datasets being generated by:

obtaining street view images in a predetermined geographic region,
feeding the street view images to a ranking model which is trained to automatically detect and mark candidate landmarks,
determining subpaths between candidate landmarks, and
providing the street view images comprising the marked candidate landmarks to an annotator system for human annotation of the text sequence.

**12.** The method according to the preceding method claim, wherein
the ranking model is trained based on a set of human annotated couples of street view images, the human annotation indicating which one of the two images provides a more prominent landmark.

**Patentansprüche**

**1.** System zum Navigieren eines Fahrzeugs im Freien unter Verwendung von Sprachanweisungen, wobei das System konfiguriert ist, um das Fahrzeug entlang eines angewiesenen Navigationspfads zu navigieren, umfassend Markierungspunkte entlang des Navigationspfads und Teilpfade zwischen benachbarten Markierungspunkten, das System umfassend:

ein Sprachmodell (LM), das konfiguriert ist, um semantische Navigationsinformationen basierend auf eingegebenen Sprachanweisungen auszugeben, wobei die eingegebenen Sprachanweisungen den angewiesenen Navigationspfad beschreiben, die semantischen Navigationsinformationen umfassend mindestens eine Teilpfadbeschreibung und mindestens eine Markierungspunktbeschreibung,
ein Speichermodul ($M_t$), das konfiguriert ist, um einen bereits zurückgelegten Weg von dem zuletzt passierten Markierungspunkt zu speichern, sodass ein Zustand des Speichers beim Fahren kontinuierlich und/oder wiederholt aktualisiert wird,
ein Richtungsabgleichmodell (DMM), das konfiguriert ist, um eine Ähnlichkeit zwischen einer Teilpfadbeschreibung und dem aktuellen Speicherzustand zu schätzen, um eine Richtungsabgleichbewertung auszugeben,
ein Markierungspunktabgleichmodell (LMM), das konfiguriert ist, um die Markierungspunktbeschreibung mit einem aktuellen Bild abzugleichen, das von der Umgebung des Fahrzeugs erfasst wird, um eine Markierungspunktabgleichbewertung auszugeben,
ein Aktionsraumwahrscheinlichkeit-Vorhersagenetzwerk, das konfiguriert ist, um mögliche Bewegungsrichtungen basierend auf dem aktuellen Bild, dem Speicherzustand und der Teilpfadbeschreibung zu schätzen, um eine Aktionsraumwahrscheinlichkeit auszugeben, und
ein Aktionsmodell, das konfiguriert ist, um einen nächsten Navigationsschritt an dem aktuellen Standort basierend auf der Richtungsabgleichbewertung, der Markierungspunktabgleichbewertung und der Aktionsraumwahrscheinlichkeit vorherzusagen.

**2.** System nach Anspruch 1, ferner umfassend:

ein Markierungspunktindikator-Kontrollmodell, umfassend einen Aufmerksamkeitsmechanismus, der konfiguriert ist, um einen Markierungspunktindikator basierend auf dem Markierungspunktabgleichresultat auszugeben, wobei der Markierungspunktindikator angibt, ob ein Markierungspunkt bereits erreicht worden ist, wobei die Ausgabe des Markierungspunktindikator-Kontrollmodells dem Sprachmodell zugeführt wird,
wobei das Markierungspunktindikator-Kontrollmodell konfiguriert ist, sodass das Markierungspunktindikator-Kontrollmodell jedes Mal, wenn eine visuelle Beobachtung erfolgreich mit einem Markierungspunkt abgeglichen wird, eine Referenzposition einer weichen Aufmerksamkeitskarte über die Sprachanweisung inkrementiert, um sowohl den Markierungspunkt als auch die Richtungsbeschreibungen zu aktualisieren.

**3.** System nach Anspruch 1, wobei die Sprachanweisungen in Form einer Textsequenz sind, wobei das Sprachmodell einen Aufmerksamkeitsmechanismus umfasst, der konfiguriert ist, um die mindestens eine Teilpfadbeschreibung und die Markierungspunktbeschreibung zu extrahieren.

**4.** System nach einem der vorherigen Ansprüche, wobei der Speicherzustand durch ein gespeichertes Bild dargestellt wird.

**5.** System nach einem der vorherigen Ansprüche, wobei die Markierungspunkte stationäre Objekte sind, die sich im Freien befinden, und/oder
jeder Teilpfad ein Straßensegment oder eine Vielzahl miteinander verbundener Straßensegmente zwischen zwei benachbarten Markierungspunkten umfasst.

**6.** System nach einem der vorherigen Ansprüche, wobei das System konfiguriert ist, um das aktuelle Bild von einer Panoramakamera zu empfangen, die die Umgebung des Fahrzeugs erfasst.

**7.** System nach einem der vorherigen Ansprüche, wobei das Sprachmodell ein BERT-Transformationsmodell umfasst, das für die Klassifizierung von jedem Wort in den eingegebenen Sprachanweisungen vortrainiert ist.

8. System nach einem der vorherigen Ansprüche, wobei das Richtungsabgleichmodell ein generatives Bildbeschriftungsmodell umfasst, das konfiguriert ist, um die Wahrscheinlichkeit der Rekonstruktion der Sprachbeschreibung anhand des Bilds zu berechnen, das den aktuellen Speicherzustand darstellt, und/oder das Markierungspunktabgleichmodell ein generatives Bildbeschriftungsmodell umfasst, das konfiguriert ist, um die Wahrscheinlichkeit einer Rekonstruktion der Sprachbeschreibung anhand des aktuellen, von der Umgebung des Fahrzeugs aufgenommenen Bilds zu berechnen.

9. System nach Anspruch 8, wobei:
das generative Bildbeschriftungsmodell des Richtungsabgleichmodells und/oder des Markierungspunktabgleichmodells ein Transformationsmodell umfasst, das zum Beschriften unter Verwendung von Grundwahrheits-Speicherbildern und Richtungsanweisungen der Grundwahrheits-Speicherbilder vortrainiert ist.

10. System nach einem der vorherigen Ansprüche, wobei das Markierungspunktindikator-Kontrollmodell ein LSTM-Netz für adaptive Berechnungszeit (ACT) umfasst, und/oder das Aktionsmodell ein LSTM-Netz umfasst.

11. Verfahren zum Navigieren eines Fahrzeugs im Freien unter Verwendung von Sprachanweisungen, wobei das Verfahren durch ein System implementiert wird, das darauf trainiert ist, das Fahrzeug entlang eines angewiesenen Navigationspfads zu navigieren, der Markierungspunkte entlang des Navigationspfads und Teilpfade zwischen benachbarten Markierungspunkten umfasst, das Verfahren umfassend die folgenden Schritte:

Verwenden eines trainierten Sprachmodells (LM) des Systems, um semantische Navigationsinformationen basierend auf eingegebenen Sprachanweisungen auszugeben, wobei die eingegebenen Sprachanweisungen den angewiesenen Navigationspfad beschreiben, die semantischen Navigationsinformationen umfassend mindestens eine Teilpfadbeschreibung und mindestens eine Markierungspunktbeschreibung,
Speichern eines bereits zurückgelegten Wegs von dem zuletzt passierten Markierungspunkt in einem Speichermodul ($M_t$), wobei ein Zustand des Speichers beim Fahren kontinuierlich und/oder wiederholt aktualisiert wird,
Verwenden eines trainierten Richtungsabgleichmodells (DMM), um eine Ähnlichkeit zwischen einer Teilpfadbeschreibung und dem Speicherzustand zu schätzen, um eine Richtungsabgleichbewertung auszugeben,
Verwenden eines trainierten Markierungspunktabgleichmodells (LMM), um die Markierungspunktbeschreibung mit einem aktuellen Bild abzugleichen, das von der Umgebung des Fahrzeugs erfasst wird, um eine Markierungspunktabgleichbewertung auszugeben,
Schätzen, durch ein Aktionsraumwahrscheinlichkeit-Vorhersagenetzwerk, möglicher Bewegungsrichtungen basierend auf dem aktuellen Bild, dem Speicherzustand und der Teilpfadbeschreibung, um eine Aktionsraumwahrscheinlichkeit auszugeben, und
Verwenden eines trainierten Aktionsmodells, um einen nächsten Navigationsschritt an dem aktuellen Standort basierend auf der Richtungsabgleichbewertung, der Markierungspunktabgleichbewertung und der Aktionsraumwahrscheinlichkeit vorherzusagen.
wobei das Sprachmodell, das Richtungsabgleichmodell, das Markierungspunktabgleichmodell und das Aktionsmodell unter Verwendung von Trainingsdatensätzen trainiert werden, umfassend eine Vielzahl von geografischen Navigationspfaden, insbesondere auf einer Karte,
und für jeden geografischen Navigationspfad eine Textsequenzanmerkung, umfassend Anweisungen in natürlicher Sprache, wobei die Anweisungen in natürlicher Sprache Markierungspunkte entlang des Navigationspfads und Teilpfade zwischen benachbarten Markierungspunkten beschreiben, wobei solche Trainingsdatensätze durch Folgendes erzeugt werden:

Erlangen von Straßenansichten in einer bestimmten geografischen Region,
Einspeisen der Straßenansichten in ein Ranking-Modell, das trainiert ist, um automatisch Markierungspunktkandidaten zu erkennen und zu markieren,
Bestimmen von Teilpfaden zwischen Kandidaten-Markierungspunkten, und
Bereitstellen der Straßenansichtsbilder, umfassend die markierten Kandidaten-Markierungspunkte, für ein Kommentierungssystem zur menschlichen Kommentierung der Textsequenz.

12. Verfahren nach dem vorherigen Verfahrensanspruch, wobei das Ranking-Modell basierend auf einem Satz von mit menschlichen Anmerkungen versehenen Paaren von Straßenansichtsbildern trainiert wird, wobei die menschliche Anmerkung angibt, welches der zwei Bilder einen markanteren Markierungspunkt bereitstellt.

**Revendications**

1. Système pour la navigation en extérieur d'un véhicule en utilisant des instructions de langage, le système étant configuré pour amener le véhicule à naviguer le long d'une trajectoire de navigation instruite comprenant des points de repère le long de la trajectoire de navigation et des trajectoires secondaires entre les points de repère adjacents, le système comprenant :

un modèle de langage (LM) configuré pour délivrer de l'information de navigation sémantique sur la base d'instructions de langage entrées, lesdites instructions de langage entrées décrivant la trajectoire de navigation instruite, ladite information de navigation sémantique comprenant au moins une description de trajectoire secondaire et au moins une description de point de repère,
un module de mémoire ($M_t$) configuré pour stocker une trajectoire déjà parcourue depuis le dernier point de repère passé, de telle sorte qu'un état de la mémoire est mis à jour de manière continue et/ou répétée pendant le déplacement,
un modèle de concordance directionnelle (DMM) configuré pour estimer une similitude entre une description de trajectoire secondaire et l'état de mémoire courant, afin de délivrer un score de concordance directionnelle,
un modèle de concordance de point de repère (LMM) configuré pour faire correspondre la description de point de repère avec une image courante saisie à partir de l'environnement du véhicule, afin de délivrer un score de concordance de point de repère,
un réseau de prédiction de probabilité d'espace d'action configuré pour estimer des directions de déplacement possibles sur la base de l'image courante, de l'état de mémoire et de la description de trajectoire secondaire, afin de délivrer une probabilité d'espace d'action, et
un modèle d'action configuré pour prédire une étape de navigation suivante au niveau de la position courante sur la base du score de concordance directionnelle, du score de concordance de point de repère et de la probabilité d'espace d'action.

2. Système selon la revendication 1, comprenant en outre :

un modèle de commande d'indicateur de point de repère comprenant un mécanisme d'attention configuré pour délivrer un indicateur de point de repère sur la base du score de concordance de point de repère, l'indicateur de point de repère indiquant si un point de repère a déjà été atteint,
la sortie du modèle de commande d'indicateur de point de repère étant envoyée au modèle de langage,
le modèle de commande d'indicateur de point de repère étant configuré de telle sorte que, chaque fois qu'une observation visuelle correspond avec succès à un point de repère, le modèle de commande d'indicateur de point de repère incrémente une position de référence d'une carte d'attention logicielle sur l'instruction de langage pour mettre à jour à la fois les descriptions de point de repère et directionnelles.

3. Système selon la revendication 1, dans lequel

les instructions de langage sont sous la forme d'une séquence de textes,
le modèle de langage comprenant un mécanisme d'attention configuré pour extraire la au moins une description de trajectoire secondaire et description de point de repère.

4. Système selon l'une quelconque des revendications précédentes, dans lequel l'état de mémoire est représenté par une image stockée.

5. Système selon l'une quelconque des revendications précédentes, dans lequel les points de repère sont des objets stationnaires situés en extérieur, et/ou
chaque trajectoire secondaire comprend un segment de route ou une pluralité de segments de route liés entre deux points de repère adjacents.

6. Système selon l'une quelconque des revendications précédentes, dans lequel le système est configuré pour recevoir l'image courante en provenance d'une caméra panoramique qui capture l'environnement du véhicule.

7. Système selon l'une quelconque des revendications précédentes, dans lequel le modèle de langage comprend un modèle de transformation BERT qui est préalablement entraîné pour classer chaque mot dans les instructions de langage entrées.

**8.** Système selon l'une quelconque des revendications précédentes, dans lequel le modèle de concordance directionnelle comprend un modèle de sous-titrage d'image génératif configuré pour calculer la probabilité de reconstruire la description de langage étant donnée l'image représentant l'état de mémoire courant, et/ou
le modèle de concordance de point de repère comprend un modèle de sous-titrage d'image génératif configuré pour calculer la probabilité de reconstruire la description de langage étant donnée l'image courante saisie à partir de l'environnement du véhicule.

**9.** Système selon la revendication 8, dans lequel
le modèle de sous-titrage d'image génératif du modèle de concordance directionnelle et/ou du modèle de concordance de point de repère comprend un modèle de transformation préalablement entraîné pour attribuer un sous-titrage en utilisant des images de mémoire de réalité du terrain et des instructions directionnelles des images de mémoire de réalité du terrain.

**10.** Système selon l'une quelconque des revendications précédentes, dans lequel le modèle de commande d'indicateur de point de repère comprend un réseau LSTM de temps de calcul adaptatif (ACT), et/ou le modèle d'action comprend un réseau LSTM.

**11.** Procédé pour la navigation en extérieur d'un véhicule en utilisant des instructions de langage, le procédé étant mis en œuvre par un système entraîné pour amener le véhicule à naviguer le long d'une trajectoire de navigation instruite comprenant des points de repère le long de la trajectoire de navigation et des trajectoires secondaires entre des points de repère adjacents, le procédé comprenant les étapes de :

utilisation d'un modèle de langage entraîné (LM) du système pour délivrer de l'information de navigation sémantique sur la base d'instructions de langage entrées, lesdites instructions de langage entrées décrivant la trajectoire de navigation instruite, ladite information de navigation sémantique comprenant au moins une description de trajectoire secondaire et au moins une description de point de repère,
stockage d'une trajectoire déjà parcourue depuis le dernier point de repère passé dans un module de mémoire (M$_t$), un état de la mémoire étant mis à jour de manière continue et/ou répétée pendant un déplacement,
utilisation d'un modèle de concordance directionnelle entraîné (DMM) pour estimer une similitude entre une description de trajectoire secondaire et l'état de mémoire, afin de délivrer un score de concordance directionnelle,
utilisation d'un modèle de concordance de point de repère entraîné (LMM) pour faire correspondre la description de point de repère avec une image courante saisie à partir de l'environnement du véhicule, afin de délivrer un score de concordance de point de repère,
estimation, par un réseau de prédiction de probabilité d'espace d'action, de directions de déplacement possibles sur la base de l'image courante, de l'état de mémoire et de la description de trajectoire secondaire, afin de délivrer une probabilité d'espace d'action, et
utilisation d'un modèle d'action entraîné pour prédire une étape de navigation suivante au niveau de la position courante sur la base du score de concordance directionnelle, du score de concordance de point de repère et de la probabilité d'espace d'action,
le modèle de langage, le modèle de concordance directionnelle, le modèle de concordance de point de repère, et le modèle d'action étant entraînés en utilisant des ensembles de données d'entraînement comprenant une pluralité de trajectoires de navigation géographique, en particulier sur une carte, et pour chaque trajectoire de navigation géographique, une annotation de séquence de texte comprenant des instructions de langage naturel, les instructions de langage naturel décrivant des points de repère le long de la trajectoire de navigation et de trajectoires secondaires entre des points de repère adjacents, ces ensembles de données d'entraînement étant générés par :

obtention d'images de vue de rue dans une région géographique prédéterminée,
fourniture des images de vue de rue à un modèle de notation qui est entraîné pour détecter et marquer automatiquement des points de repère candidats,
détermination de trajectoires secondaires entre des points de repère candidats, et
fourniture des images de vue de rue comprenant les points de repère candidats marqués à un système d'annotation pour une annotation humaine de la séquence de textes.

**12.** Procédé selon la revendication de procédé précédente, selon lequel le modèle de notation est entraîné sur la base d'un ensemble de couples annotés par l'homme d'images de vue de rue, l'annotation humaine indiquant laquelle des deux images procure un point de repère plus important.

# FIG.1

# FIG.2

FIG.3

# FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017314954 A1

**Non-patent literature cited in the description**

- **KARPATHY, A. ; FEI-FEI, L.** Deep visual-semantic alignments for generating image descriptions. *Proceedings of the IEEE conference on computer vision and pattern recognition,* 2015
- **AGRAWAL, A. ; LU, J. ; ANTOL, S. ; MITCHELL, M. ; ZITNICK, C.L. ; PARIKH, D. ; BATRA, D.** Vqa: Visual question answering. *International Journal of Computer Vision,* 2017, vol. 123 (1), 4-31
- **ANNE HENDRICKS, L. ; WANG, O. ; SHECHT-MAN, E. ; SIVIC, J. ; DARRELL, T. ; RUSSELL, B.** Localizing moments in video with natural language. *Proceedings of the IEEE International Conference on Computer Vision,* 2017
- **HERMANN, K.M. ; HILL, F. ; GREEN, S. ; WANG, F. ; FAULKNER, R. ; SOYER, H. ; SZEPESVARI, D. ; CZARNECKI, W. ; JADERBERG, M. ; TEPL-YASHIN, D.** Grounded language learning in a simulated 3d world. *CoRR abs/1706.06551,* 2017
- **MIROWSKI, P.W. ; PASCANU, R. ; VIOLA, F. ; SOYER, H. ; BALLARD, A.J. ; BANINO, A. ; DENIL, M. ; GOROSHIN, R. ; SIFRE, L. ; KAVUKCUOGLU, K.** Learning to navigate in complex environments. *ICLR,* 2017
- **THOMA, J. ; PAUDEL, D.P. ; CHHATKULI, A. ; PROBST, T. ; GOOL, L.V.** Mapping, localization and path planning for image-based navigation using visual features and map. *The IEEE Conference on Computer Vision and Pattern Recognition (CVPR),* 2019
- **WORTSMAN, M. ; EHSANI, K. ; RASTEGARI, M. ; FARHADI, A. ; MOTTAGHI, R.** Learning to learn how to learn: Self-adaptive visual navigation using meta-learning. *The IEEE Conference on Computer Vision and Pattern Recognition (CVPR)*
- **ANDERSON, P. ; WU, Q. ; TENEY, D. ; BRUCE, J. ; JOHNSON, M. ; S"UNDERHAUF, N. ; REID, I. ; GOULD, S. ; VAN DEN HENGEL, A.** Vision-and-language navigation: Interpreting visually-grounded navigation instructions in real environments. *Proceedings of the IEEE Conference on Computer Vision and Pattern Recognition,* 2018

- **CHEN, H. ; SHUR, A. ; MISRA, D. ; SNAVELY, N. ; ARTZI, Y.** Touchdown: Natural language navigation and spatial reasoning in visual street environments. *Proceedings of the IEEE Conference on Computer Vision and Pattern Recognition,* 2019
- **HÖLSCHER, C. ; TENBRINK, T. ; WIENER, J.M.** Would you follow your own route description? cognitive strategies in urban route planning. *Cognition,* 2011, vol. 121 (2), 228-247
- **MILLONIG, A. ; SCHECHTNER, K.** Developing landmark-based pedestrian-navigation systems. *IEEE Transactions on Intelligent Transportation Systems,* 2007, vol. 8 (1), 43-49
- **XU, K. ; BA, J. ; KIROS, R. ; CHO, K. ; COURVILLE, A. ; SALAKHUDINOV, R. ; ZEMEL, R. ; BENGIO, Y.** Show, attend and tell: Neural image caption generation with visual attention. *International conference on machine learning,* 2015, 2048-2057
- **VASWANI, A. ; SHAZEER, N. ; PARMAR, N. ; USZ-KOREIT, J. ; JONES, L. ; GOMEZ, A.N. ; KAISER, L. ; POLOSUKHIN, I.** Attention is all you need. *Advances in Neural Information Processing Systems,* 2017, 5998-6008
- **DEVLIN, J. ; CHANG, M.W. ; LEE, K. ; TOUTANO-VA, K.** Bert: Pre-training of deep bidirectional transformers for language understanding. *arXiv: 1810.04805,* 2018
- **KUMAR, A. ; GUPTA, S. ; FOUHEY, D. ; LEVINE, S. ; MALIK, J.** Visual memory for robust path following. *Advances in Neural Information Processing Systems*
- **ZHU, X. ; LI, L. ; LIU, J. ; PENG, H. ; NIU, X.** Captioning transformer with stacked attention modules. *Applied Sciences,* 2018, vol. 8 (5), 739
- **CHOPRA, S.** Learning a similarity metric discriminatively, with application to face verification. *IEEE Conference on Compter Vision and Pattern Recognition*
- **DEVLIN, J. ; CHANG, M.W. ; LEE, K. ; TOUTANO-VA, K.** Bert: Pre-training of deep bidirectional transformers for language under-standing. *arXiv:1810.04805,* 2018

• **B. COORS ; A. PAUL CONDURACHE ; A. GEIGER.** Spherenet: Learning spherical representations for detection and classification in omnidirectional images. *Proceedings of the European Conference on Computer Vision (ECCV),* 2018, 518-533

• **LECUN, Y. ; BOTTOU, L. ; BENGIO, Y. ; HAFFNER, P. et al.** Gradient-based learning applied to document recognition. *Proceedings of the IEEE,* 1998, vol. 86 (11), 2278-2324

• **HE, K. ; ZHANG, X. ; REN, S. ; SUN, J.** Deep residual learning for image recognition. *Proceedings of the IEEE conference on computer vision and pattern recognition,* 2016

• **DENG, J. ; DONG, W. ; SOCHER, R. ; LI, L.J. ; LI, K. ; FEI-FEI, L.** Imagenet: A large-scale hierarchical image database. *IEEE conference on computer vision and pattern recognition,* 2009